# EUROPEAN PATENT APPLICATION

(11) **EP 4 550 457 A1**
(43) Date of publication of application: **07.05.2025**
(21) Application number: 23830970.2
(22) Date of filing: 02.06.2023
(51) Int. Cl.: H01M 4/38, H01M 4/134, H01M 4/36, H01M 4/587, H01M 10/052, H01M 10/0567

(54) **NEGATIVE ELECTRODE MATERIAL FOR SECONDARY BATTERY, AND SECONDARY BATTERY**

(30) Priority: 30.06.2022 JP 2022106349
(71) Applicant: Panasonic Intellectual Property Management Co., Ltd., Kadoma-shi, Osaka 571-0057 (JP)
(72) Inventor: SATO Yosuke, Kadoma-shi, Osaka 571-0057 (JP); OKUNO Yukiho, Kadoma-shi, Osaka 571-0057 (JP); ASANO Taisuke, Kadoma-shi, Osaka 571-0057 (JP)
(74) Representative: Eisenführ Speiser
(86) International application number: PCT/JP2023/020601
(87) International publication number: WO 2024/004520

(57) **Abstract**

A negative electrode material for secondary batteries includes a silicon-containing material including composite particles containing silicon, and a conductive layer disposed on surfaces of the composite particles. The composite particles each include an ion-conducting phase, and silicon phases dispersed in the ion-conducting phase. The conductive layer contains a sulfur component, and has a content N₁ of sulfur element in the conductive layer of 50 mass% or less.

## Description

### [Technical Field]

The present disclosure relates to a negative electrode material for secondary batteries, and a secondary battery using the negative electrode material for secondary batteries.

### [Background Art]

In recent years, secondary batteries including nonaqueous electrolyte secondary batteries, because of their high voltage and high energy density, have been expected as power sources for small consumer applications, power storage devices, and electric cars. With increasing demand for higher battery energy density, a material containing silicon (Si) that forms an alloy with lithium has been expected to be utilized as a negative electrode active material having a high theoretical capacity density.

Patent Literature 1 proposes a negative electrode active material including a lithium silicate phase represented by Li_{2z}SiO_{2+z} where 0 < z < 2, and silicon particles dispersed in the lithium silicate phase.

Patent Literature 2 proposes a lithium-ion battery including a negative electrode and an electrolyte. The negative electrode includes composite particles. The composite particles each include a silicon-based domain. The composite particles each include a matrix material with the silicon-based domain embedded therein. The composite particles and the electrolyte have an interface therebetween, and an SEI layer is present at the interface. The SEI layer contains one or more compounds each having a carbon-carbon chemical bond, and one or more compounds each having a carbon-oxygen chemical bond. A ratio defined by dividing the area of a first peak attributed to the C-C chemical bond and centered at 284.33 eV by the area of a second peak attributed to the C-O chemical bond and centered at 285.83 eV in an X-ray photoelectron spectroscopic measurement of the SEI is at least 1.30.

### [Citation List]

### [Patent Literature]

Patent Literature 1: International Publication WO2016/35290
Patent Literature 2: Japanese Laid-Open Patent Publication No. 2020-537335

### [Summary of Invention]

### [Technical Problem]

The negative electrode active material including a lithium silicate phase and silicon particles dispersed therein as disclosed in Patent Literature 1 is promising. The lithium silicate, however, is apt to be eroded by a decomposition product (e.g., HF) generated by the side reaction of a nonaqueous electrolyte component. When the lithium silicate is eroded, the surface area of the lithium silicate phase increases, which facilitates the progress of the side reaction. As a result, the deterioration in capacity of the nonaqueous electrolyte secondary battery associated with repeated charge-discharge cycles becomes severe.

### [Solution to Problem]

In view of the above, one aspect of the present disclosure relates to a negative electrode material for secondary batteries, including a silicon-containing material including composite particles containing silicon, and a conductive layer disposed on surfaces of the composite particles, the composite particles each including an ion-conducting phase, and silicon phases dispersed in the ion-conducting phase, the conductive layer containing a sulfur component, and having a content N₁ of sulfur element in the conductive layer of 50 mass% or less.

Another aspect of the present disclosure relates to a secondary battery, including a positive electrode, a negative electrode, and an electrolyte, wherein the negative electrode includes a carbon material, and the above-described negative electrode material for secondary batteries.

### [Advantageous Effects of Invention]

According to the present disclosure, it is possible to suppress the deterioration in capacity associated with repeated charge-discharge cycles of the secondary battery. Such deterioration in capacity is hereinafter sometimes referred to as "deterioration in charge-discharge cycle characteristics."

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic sectional view of a composite particle (silicon-containing material) covered with a S-containing conductive layer according to one embodiment of the present disclosure.
[FIG. 2] A schematic sectional view of the composite particle covered with a S-containing conductive layer (silicon-containing material) after subjected to charging and discharging several times.
[FIG. 3] A partially cut-away schematic oblique view of a secondary battery according to one embodiment of the present disclosure.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. For the components other than those characteristic of the present disclosure, any known components may be adopted. In the present specification, when referring to "a range of a numerical value A to a numerical value B," the range includes the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

### (Negative electrode material for secondary batteries)

A negative electrode material for secondary batteries according to an embodiment of the present disclosure includes a silicon-containing material.

### [Silicon-containing material]

The silicon-containing material includes composite particles containing silicon, and a conductive layer disposed on surfaces of the composite particles. The composite particles each include an ion-conducting phase, and silicon phases dispersed in the ion-conducting phase. The conductive layer contains a sulfur (S) component, and has a content N₁ of sulfur element in the conductive layer of 2 mass% or less.

In the following, the conductive layer containing a S component is sometimes referred to as a "S-containing conductive layer." The negative electrode material which includes composite particles and a conductive layer disposed on surfaces thereof and in which the conductive layer contains a S component is sometimes referred to as "composite particles having a S-containing conductive layer."

Here, the state in which the S-containing conductive layer is disposed on surfaces of the composite particles includes a state in which the S-containing conductive layer is attached or deposited on at least part of the surface of each of the composite particles, a state in which the S-containing conductive layer covers like a film at least part of the surface of each of the composite particles, and the like.

The silicon phases expand and contract repeatedly associated with charging and discharging of the nonaqueous electrolyte secondary battery. However, since the silicon phases are dispersed in the ion-conducting phase, the composite particles have excellent structural stability.

Since surfaces of the composite particles are covered with a conductive layer, cracking and breaking of the composite particles are suppressed, and the composite particles are protected from the electrolyte solution, which leads to suppressed side reactions. This suppresses the erosion of the matrix (ion-conducting phase) due to the side reaction with the electrolyte solution, and improves the charge-discharge cycle characteristics. Furthermore, since the conductive layer contains a S component, the charge-discharge cycle characteristics are significantly improved.

Furthermore, by covering surfaces of the composite particles with a S-containing conductive layer, the conductivity of the composite particles can be drastically increased. The S-containing conductive layer preferably contains a carbon material as a major component. The carbon material preferably includes at least one selected from the group consisting of a carbon compound and a carbonaceous material. The carbonaceous material may be crystalline carbon or amorphous carbon.

The S component in the S-containing conductive layer is highly reactive with a component of the electrolyte or a decomposition product (hereinafter, an electrolyte decomposition product), such as HF, generated by the side reaction of an electrolyte component, and through its reaction, a surface film (solid electrolyte film) containing S can be formed so as to cover the conductive layer or the composite particles. The surface film containing S is robust and stable. The formation of a robust and stable surface film can remarkably reduce the chance of contact between the electrolyte decomposition product and the ion-conducting phase. Therefore, the surface area increase due to the erosion of the ion-conducting phase is suppressed, and the deterioration in charge-discharge cycle characteristics due to the progress of the side reaction is suppressed.

The content N₁ of sulfur element in the S-containing conductive layer is 50 mass% or less. The content N₁ may be 30 mass% or less, and may be 25 mass% or less. The content N₁ may be 1 mass% or more and 30 mass% or less, and may be 1 mass% or more and 25 mass% or less.

A ratio N₂ of the mass of the sulfur element contained in the S-containing conductive layer to the mass of the silicon-containing material, which is the sum of the masses of the S-containing conductive layer and the composite particles, may be 0.02% or more (0.0002 or more). The ratio N₂ may be 0.02% or more and 1% or less (0.0002 or more and 0.01 or less). When the ratio N₂ is in this range, the effect of suppressing the deterioration in charge-discharge cycle characteristics is high.

The content of the sulfur element contained in the S-containing conductive layer can be determined using a later-described carbon/sulfur analyzer.

A sulfur compound may be contained in the electrolyte (electrolyte solution) of the secondary battery. The sulfur compound contained in the electrolyte can be decomposed on the surface of the silicon-containing material, to form a surface film (solid electrolyte film) containing S so as to cover the conductive layer or the composite particles. This can suppress the surface area increase due to the dissolution of the ion-conducting phase, and suppress the deterioration in charge-discharge cycle characteristics due to the progress of the side reaction. However, when the sulfur compound is contained at a high concentration in the electrolyte, this tends to corrode the battery case. In this regard, by containing a S component in the conductive layer, the corrosion of the battery case is suppressed, and a solid electrolyte film containing S can be efficiently formed on the surface of the silicon-containing material.

The average particle diameter of the composite particles is, for example, 1 µm or more and 25 µm or less, and may be 4 µm or more and 15 µm or less. In the above particle diameter range, the stress due to volume changes in the composite particles associated with charging and discharging is likely to be relaxed, and favorable cycle characteristics are likely to be obtained. The surface area of the composite particles also becomes appropriate in size, and the capacity reduction due to the side reaction with the nonaqueous electrolyte is also suppressed. The average particle diameter of the composite particles means a particle diameter (volume average particle diameter) at 50% cumulative volume in a particle size distribution measured by a laser diffraction scattering method. As the measurement instrument, for example, "LA-750" available from Horiba, Ltd. (HORIBA) can be used. The S-containing conductive layer has no substantial influence on the average particle diameter of the composite particles. Therefore, the average particle diameter of the composite particles may be regarded as substantially equal to the average particle diameter of the composite particles having a S-containing conductive layer.

The average particle diameter of the composite particles may be measured, with respect to the negative electrode taken out from the disassembled secondary battery, by observing a cross section of the negative electrode active material layer using a SEM or TEM. In this case, the average particle diameter is determined by arithmetically averaging the maximum diameters of randomly selected 100 particles.

The silicon-containing material and the composite particles can be taken out from the battery in the following manner. First, the battery in a fully discharged state is disassembled, to take out the negative electrode, and the negative electrode is washed with anhydrous ethyl methyl carbonate or dimethyl carbonate, to remove the nonaqueous electrolyte component. As described later, the negative electrode has a negative electrode current collector and a negative electrode mixture layer supported on a surface thereof. The negative electrode mixture layer is peeled off from the copper foil, and ground in a mortar, to obtain a sample powder. Next, the sample powder is dried in a dry atmosphere for 1 hour, and immersed in a weakly boiled 6M hydrochloric acid for 10 minutes, to remove elements derived from components, such as a binder, other than the silicon-containing material. Next, the sample powder is washed with ion-exchanged water, and filtered, followed by drying at 200 °C for 1 hour. This is followed by heating to 900 °C in an oxygen atmosphere to remove the S-containing conductive layer, and thus, the composite particles only can be isolated. The fully discharged state means a state in which the depth of discharge (DOD) is 90% or more (the state of charge (SOC) is 10% or less).

### <Ion-conducting phase>

The ion-conducting phase forms a matrix for dispersing silicon phases therein. The ion-conducting phase may be, for example, a silicate phase or an amorphous carbon layer.

The silicate phase is constituted of a compound containing a metal element, silicon (Si), and oxygen (O). The metal element is not limited to a particular one, but when including at least lithium, for example, the entry and exit of lithium ions into and from the silicate phase is facilitated. In other words, the silicate phase preferably includes at least a lithium silicate.

The lithium silicate is a silicate containing lithium (Li), silicon (Si), and oxygen (O). The atomic ratio O/Si of O to Si in the lithium silicate is, for example, more than 2 and less than 4. When the O/Si ratio is more than 2 and less than 4 (z in a later-described formula satisfies 0 < z < 2), it is advantageous in the stability and the lithium ion conductivity of the silicate phase. The O/Si ratio is preferably more than 2 and less than 3. The atomic ratio Li/Si of Li to Si in the lithium silicate is, for example, more than 0 and less than 4.

The composition of the lithium silicate can be represented by a formula: Li_{2z}SiO_{2+z} where 0 < z < 2. In view of the stability, the ease of production, and the lithium ion conductivity, z preferably satisfies the relationship of 0 < z < 1, and is more preferably z = 1/2. The lithium silicate that satisfies z = 1/2 can be represented by Li₂Si₂O₅. The lithium silicate desirably includes Li₂Si₂O₅ as a major component, and desirably, Li₂Si₂O₅ is a major component of the whole silicate phase. Here, the "major component" refers to a component that occupies 50 mass% or more of the whole lithium silicate phase or the whole silicate phase, which may occupy 70 mass% or more.

The silicate phase can further contain another element, in addition to Li, Si, and O. When the silicate phase contains another element, the chemical stability and the lithium ion conductivity of the silicate phase are improved, or the side reaction due to the contact between the silicate phase and the nonaqueous electrolyte is suppressed.

The silicate phase may contain, as another element other than Li, Si, and O, at least one element selected from the group consisting of alkali metal elements (except lithium) and Group II elements.

When the silicate phase contains an alkali metal element other than Li, the crystallization hardly occurs, the viscosity in the softened state is reduced, and the fluidity is increased. Therefore, in a heat treatment process, the gaps between the silicon particles can be easily filled, and dense composite particles are likely to be produced. The alkali metal element is preferably Na and/or K, because of their inexpensive prices.

In general, silicate phases exhibit alkalinity, while Group II elements have an effect of suppressing the leaching of alkali metals from silicate phases. Therefore, when the silicate phase contains a Group II element, in preparing a slurry containing a negative electrode active material, the slurry viscosity is easily stabilized. Accordingly, the necessity of a treatment (e.g., an acid treatment) for neutralizing the alkali component in the composite particles is also reduced. The Group II element may be Ca or Mg. In particular, Ca is preferred in that it can improve the Vickers hardness of the silicate phase and further improve the cycle characteristics.

The silicate phase may contain, as another element M other than Li, Si, and O, at least one selected from the group consisting of boron (B), aluminum (Al), zirconium (Zr), niobium (Nb), tantalum (Ta), vanadium (V), lanthanum (La), yttrium (Y), titanium (Ti), phosphorus (P), bismuth (Bi), zinc (Zn), tin (Sn), lead (Pb), antimony (Sb), cobalt (Co), erbium (Er), fluorine (F), and tungsten (W). In view of the chemical resistance to the nonaqueous electrolyte and the structural stability of the silicate phase, the element M preferably includes at least one selected from the group consisting of Zr, Ti, P, Al, and B.

The silicate phase may contain a rare earth element. When the silicate phase contains a rare earth element, the charge-discharge efficiency in an early stage of charge-discharge cycles can be improved. The rare earth element may be any one selected from scandium (Sc), yttrium (Y), and a lanthanoid element. In the above element M, lanthanum (La), yttrium (Y), and erbium (Er) are rare earth elements. As a rare earth element other than the above element M, the silicate phase may contain at least one selected from the group consisting of cerium (Ce), praseodymium (Pr), and neodymium (Nd). In view of improving the lithium ion conductivity, in particular, the rare earth element preferably includes La. The proportion of La in the whole rare earth elements is preferably 90 at.% or more and 100 at.% or less.

As another element M other than alkali metal elements and Group II elements, for example, B has a low melting point and is advantageous for improving the fluidity during sintering. Al, Zr, and La can improve the hardness while maintaining the ion conductivity. Furthermore, Zr, Ti, P, Al, and B have an effect of improving the chemical resistance to the nonaqueous electrolyte and the structural stability of the silicate phase.

The silicate phase may further contain an element, such as iron (Fe), chromium (Cr), nickel (Ni), manganese (Mn), copper (Cu), and molybdenum (Mo), in a small amount.

The element M may form a compound. Depending on the kind of the element M, the compound may be, for example, a silicate of an element M, or an oxide of an element M.

In the silicate phase, the content of the element M is, for example, 1 mol% or more and 40 mol% or less, relative to the total amount of elements other than oxygen.

The contents of Li, Si, and the element M in the silicate phase can be measured by, for example, analyzing a cross section of the negative electrode mixture layer.

First, the battery in a fully discharged state is disassembled, to take out the negative electrode, and the negative electrode is washed with anhydrous ethyl methyl carbonate or dimethyl carbonate, to remove the nonaqueous electrolyte component, and then, dried. This is followed by processing with a cross section polisher (CP) to obtain a cross section of the negative electrode mixture layer. Next, the cross section of the negative electrode mixture layer is observed using a scanning electron microscope (SEM).

The content of each element can be then determined by any of the following methods. From the content of each element, the composition of the silicate phase can be calculated.

<EDX>

From a cross-sectional backscattered electron image of the negative electrode mixture layer, 10 composite particles having a maximum particle diameter of 5 µm or more are randomly selected, to perform an elemental mapping analysis by energy dispersive X-ray (EDX) on each particle. The area percentage of the target element is calculated using an image analysis software. The observation magnification is desirably 2,000 to 20,000 times. The measured values of the area percentage of the predetermined element contained in the 10 particles are averaged. From the obtained average value, the content of the target element can be calculated.

Desirable cross-sectional SEM-EDX analysis measurement conditions are shown below.

### <SEM-EDX measurement conditions>

Processing apparatus: SM-09010 (Cross Section Polisher), available from JEOL
Processing conditions: accelerating voltage 6 kV
Current value: 140 µA
Degree of vacuum: 1×10⁻³ to 2×10⁻³ Pa
Measuring apparatus: Electron microscope SU-70 available from HITACHI
Acceleration voltage during analysis: 10 kV
Field: Free mode
Probe current mode: Medium
Probe current range: High
Anode Ap.: 3
OBJ Ap.: 2
Analysis area: 1 µm square
Analysis software: EDAX Genesis
CPS: 20,500
Lsec: 50
Time constant: 3.2

### <AES>

From a cross-sectional backscattered electron image of the negative electrode mixture layer, 10 composite particles having a maximum particle diameter of 5 µm or more are randomly selected, to perform a qualitative/quantitative analysis of elements on each particle using an Auger electron spectroscopy (AES) analyzer (e.g., JAMP-9510F, available from JEOL Corporation). The measurement conditions may be set such that, for example, the acceleration voltage is 10 kV, the beam current is 10 nA, and the analysis region is 20 µmϕ. The content of a predetermined element is determined by averaging the contents thereof in the 10 particles.

During charging and discharging, due to the decomposition of the electrolyte and the like, a surface film is formed on surfaces of the composite particles. The mapping analysis by EDX or AES are performed within 1 µm or more inward from the peripheral edge of the cross section of the composite particle, so that the thin surface film and the conductive layer are not included in the measurement range. The measurement of the sample is preferably performed before cycling or in the early stage of cycling because, in the late stage of cycling, it is difficult to make a distinction from the electrolyte decomposition product.

### <ICP>

A sample of the composite particles is completely dissolved in a heated acid solution (a mixed acid of hydrofluoric acid, nitric acid, and sulfuric acid), and carbon in the residue of dissolution is removed by filtration. Then, the obtained filtrate is analyzed by inductively coupled plasma emission spectroscopy (ICP), to measure a spectral intensity of each element. Subsequently, using a commercially available standard solution of the element, a calibration curve is drawn, from which the content of each element in the composite particles is calculated.

Other techniques can be used for quantification of each element, such as electron microanalyzer (EPMA), laser ablation ICP mass analysis (LA-ICP-MS), and X-ray photoelectron spectroscopy (XPS).

The contents of B, Na, K, and Al in the silicate phase can be quantitatively analyzed in accordance with JIS R3105 (1995) (method for chemical analysis of borosilicate glass).

In the composite particles, a silicate phase and silicon phases are present. The Si content obtained by the above method is the sum of the amount of Si constituting the silicon phases and the amount of Si in the silicate phase. On the other hand, the amount of Si constituting the silicon phases can be separately determined by Si-NMR. Therefore, by using Si-NMR, the amount of Si constituting the silicon phases and the amount of Si in the silicate phase can be separately determined. Note that, as the standard substance necessary for quantitative determination, a mixture containing a silicate phase whose Si content is already known and silicon phases in a predetermined ratio may be used.

Desirable Si-NMR measurement conditions are shown below.

### <Si-NMR measurement conditions>

Measuring apparatus: Solid nuclear magnetic resonance spectrometer (INOVA-400), available from Varian, Inc.
Probe: Varian 7 mm CPMAS-2
MAS: 4.2 kHz
MAS speed: 4 kHz
Pulse: DD (45° pulse + signal capture time 1H decoupling)
Repetition time: 1200 sec to 3000 sec
Observation width: 100 kHz
Observation center: around -100 ppm
Signal capture time: 0.05 sec
Accumulated number of times: 560
Sample amount: 207.6 mg

The ion conducting phase may be an amorphous carbon phase. In other words, the composite particle may be a composite particle that includes an amorphous carbon phase and silicon phases (silicon particles) dispersed in the amorphous carbon phase. The amorphous carbon phase has electrical conductivity. Therefore, even with gaps formed around such composite particles, the contacts of the composite particles with their surroundings can be easily maintained. As a result, the capacity reduction due to repeated charge-discharge cycles can be easily suppressed. The amorphous carbon may be constituted of hard carbon, soft carbon, or other carbon. The amorphous carbon is generally a carbon material having an average interplanar distance d₀₀₂ of the (002) plane measured by X-ray diffractometry of more than 0.34 nm.

The average particle diameter of the composite particles having an amorphous carbon phase may be 3 µm or more and 18 µm or less, may be 6 µm or more and 15 µm or less, and may be 8 µm or more and 12 µm or less. The content of the silicon phases (silicon particles) in the composite particles having an amorphous carbon phase may be 30 mass% or more and 80 mass% or less, and may be 40 mass% or more and 70 mass% or less. Within such a range, a sufficiently high capacity of the negative electrode is likely to be achieved, and the cycle characteristics are also likely to be improved.

The carbon content and the sulfur content in the composite particles may be measured using a carbon/sulfur analyzer (e.g., EMIA-520 available from HORIBA, Ltd.). A sample is weighed out on a magnetic board, to which a combustion agent is added. The sample is inserted into a combustion furnace (carrier gas: oxygen) heated to 1350 °C. The amount of carbon dioxide gas or sulfur oxide gas generated during combustion is detected by infrared absorption spectroscopy. In the case of carbon dioxide, a calibration curve is obtained using carbon steel (carbon content: 0.49%) available from Bureau of Analysed Samples. Ltd., from which the carbon content in the sample is determined (a high-frequency induction heating furnace combustion and infrared absorption method). In the case of sulfur oxide gas, a calibration curve is obtained using, for example, steel for sulfur determination JSS 245-6 provided by the Japan Iron and Steel Federation, from which the sulfur content is determined.

The oxygen content in the composite particles may be measured using an oxygen/nitrogen/hydrogen analyzer (e.g., EGMA-830, available from HORIBA, Ltd.). A sample is placed in a Ni capsule, which is put together with Sn pellets and Ni pellets serving as flux, into a carbon crucible heated at a power of 5.75 kW, to detect a released carbon monoxide gas. From a calibration curve obtained using a standard sample Y2O3, an oxygen content in the sample is determined (an inert gas melting and non-dispersive infrared absorption method).

### <Silicon phases>

The silicon phases are phases of elementary silicon (Si), and repeatedly absorb and release lithium ions thereinto and therefrom along with charging and discharging of the battery. The capacity develops through the Faradaic reaction in which the silicon phases are involved. The silicon phases have a large capacity and, therefore, undergo a great degree of expansion and contraction associated with charging and discharging. However, since the silicon phases are dispersed in the ion-conducting phase, the stress due to the expansion and contraction of the silicon phases is relaxed.

The silicon phases can be each constituted of a plurality of crystallites. The crystallite size of the silicon phases is preferably 30 nm or less. When the crystallite size of the silicon phases is 30 nm or less, the volume changes of the silicon phases associated with expansion and contraction during charging and discharging can be reduced, and the cycle characteristics can be further improved. For example, the isolation of a silicon phase occurs when the silicon phase contracts, as gaps are formed around the silicon phase; however, such isolation can be suppressed, and the reduction in the charge-discharge efficiency can be suppressed. The lower limit of the crystallite size of the silicon phases is not limited, but is, for example, 1 nm or more. The crystallite size of the silicon phases is more preferably 10 nm or more and 30 nm or less, still more preferably 15 nm or more and 25 nm or less. When the crystallite size of the silicon phases is 10 nm or more, the surface area of the silicon phases can be suppressed small, and the deterioration of the silicon phases accompanied by the generation of irreversible capacity hardly occurs. When the crystallite size of the silicon phases is 30 nm or less, the silicon phases are likely to evenly expand and contract, the stress generated in the composite particles is likely to be relaxed, and the cycle characteristics can be improved. The crystallite size of the silicon phases is calculated from the Scherrer's equation, using the half-value width of a diffraction peak attributed to the (111) plane of the silicon phase (elementary Si) in an X-ray diffraction pattern.

The silicon phases in the composite particles contained in the battery before initial charging are, for example, particulate. The average particle diameter of the particulate silicon phases is preferably 500 nm or less, more preferably 200 nm or less, furthermore preferably 50 nm or less. After the initial charging, the average particle diameter of the silicon phases is preferably 400 nm or less, more preferably 100 nm or less. By making the silicon phases finer, the volume changes of the composite particles during charging and discharging are reduced, and the structural stability of the composite particles can be further improved. The average particle diameter of the silicon phases is measured using a cross-sectional SEM image of the composite particles. Specifically, the average particle diameter of the silicon phases is determined by averaging the maximum diameters of randomly selected 100 silicon phases.

In view of achieving high capacity, the content of the silicon phases in the composite particles is preferably 30 mass% or more, more preferably 35 mass% or more, further more preferably 55 mass% or more. In this case, the diffusivity of lithium ions is favorable, and excellent load characteristics can be obtained. On the other hand, in view of improving the cycle characteristics, the content of the silicon phases in the composite particles is preferably 95 mass% or less, more preferably 75 mass% or less, further more preferably 70 mass% or less. In this case, the exposed surface of the silicon phases without being covered with the silicate phase decreases, and the reaction between the nonaqueous electrolyte and the silicon phases are likely to be suppressed.

### <S-containing conductive layer>

The S-containing conductive layer is disposed on surfaces of the composite particles. The S-containing conductive layer imparts electrical conductivity to the composite particles. That is, the S-containing conductive layer constitutes a part of the conductive network within the negative electrode. Even when the ion-conducting phase has, like a silicate phase, for example, a low conductivity, the current-collecting ability of the negative electrode is improved because the composite particles with the conductive layer have electrical conductivity.

The S-containing conductive layer covers at least part of the surface of each of the composite particles. Therefore, the S-containing conductive layer also acts as a barrier layer that suppresses the side reaction between the nonaqueous electrolyte and the composite particles and between the electrolyte decomposition product and the composite particles. In particular, the electrolyte decomposition product (esp. HF) tends to cause the ion-conducting phase to deteriorate. In contrast, the sulfur component contained in the S-containing conductive layer reacts with the component of the electrolyte or the electrolyte decomposition product, to form a stable surface film. This significantly suppresses the deterioration of the ion-conducting phase, and suppresses the deterioration in charge-discharge cycle characteristics.

The S-containing conductive layer, in view of securing the capacity, is preferably thin enough not to substantially influence the average particle diameter of the composite particles. When considering the securing of electrical conductivity and the diffusivity of lithium ions, the thickness of the S-containing conductive layer is preferably 1 nm or more and 200 nm or less, more preferably 5 nm or more and 100 nm or less. The thickness of the conductive layer can be measured by cross-section observation of the composite particles using a SEM or TEM. Specifically, it is determined by averaging the thicknesses of the S-containing conductive layer of randomly selected 10 composite particles having a conductive layer. The thickness of the S-containing conductive layer is determined, for each composite particle, by averaging the thicknesses measured at any 10 points.

The ratio by mass of the S-containing conductive layer to the total of the composite particles and the S-containing conductive layer may be 0.5 mass% or more and 10 mass% or less, and may be 1 mass% or more and 5 mass% or less.

The S-containing conductive layer includes an electrically conductive material and a S component dispersed in the conductive material. Preferred as the conductive material is a carbonaceous material. As the carbonaceous material, amorphous carbon, graphite, graphitizable carbon (soft carbon), non-graphitizable carbon (hard carbon), and the like can be used. In particular, amorphous carbon is preferred in that a thin conductive layer covering surfaces of the composite particles can be easily formed. Examples of the amorphous carbon includes carbon black, calcined pitch, coke, and activated carbon. Examples of the graphite includes natural graphite, artificial graphite, and graphitized mesophase carbon.

Examples of the S component include sulfonic acid compound, such as sulfates and sulfate esters. The S component may be a functional group containing sulfur, such as a sulfonic group (-SO₃H), -SH group, or -SO₂- group, bonded to a carbon atom of the carbon material.

The S component contained in the S-containing conductive layer, even in a very small amount, reacts with the electrolyte decomposition product and exerts an effect of suppressing the deterioration of the ion-conducting phase. Therefore, S may be contained in the S-containing conductive layer in any amount that does not significantly impair the function as the conductive layer. It suffices as long as the S component is detected from the S-containing conductive layer. The amount of S in the S-containing conductive layer may be, for example, 0.02% or more and 1% or less, may be 0.02% or more and 0.8% or less, and may be 0.03% or more and 0.5% or less, relative to the mass of the silicon-containing material (the total of the S-containing conductive layer and the composite particles).

The presence of the S component in the S-containing conductive layer can be confirmed by, for example, analyzing a cross section of the composite particle having a S-containing conductive layer by electron energy loss spectroscopy (TEM-EELS), to check the presence or absence of a peak derived from the S-containing group or the S-containing compound. In analyzing the inside of the composite particle, when the loss spectrum of TEM-EELS has no peak derived from the S-containing group or the S compound, it can be said that the S component is selectively contained in the S-containing conductive layer.

The content of the sulfur element in the conductive layer is determined by heating the silicon-containing material separated from the battery by the aforementioned manner in a carbon/sulfur analyzer in an oxygen atmosphere, and detecting the amount of sulfur oxide gas generated during combustion. When the silicon-containing material includes a silicate phase, the mass of the S-containing conductive layer can be determined by subtracting the mass of the composite particles after the combustion of the S-containing conductive layer from the mass of the silicon-containing material, from which the contents N₁ and N₂ can be determined.

When the ion-conducting phase is an amorphous carbon phase, and the S-containing conductive layer contains an amorphous carbonaceous material, distinguishing the boundary between the composite particles and the S-containing conductive layer in the silicon-containing material may be difficult, making it difficult to derive the thickness of the S-containing conductive layer. In that case, it suffices that the sulfur element is contained in a surface layer region from the surface of the silicon-containing material to at least 100 nm. The ion-conducting phase may contain a sulfur element.

### [Method for producing silicon-containing material]

Next, an example of a method for producing a silicon-containing material will be described in detail. The silicon-containing material is obtained by forming a S-containing conductive layer on the composite particles. The composite particles are produced by, for example, a production method including the following first to fourth steps.
(First step) A step of obtaining a compound for forming an ion-conducting phase.
(Second step) A step of, after the first step, forming a composite of the compound for forming an ion-conducting phase and raw material silicon, so that silicon phases are dispersed in the ion-conducting phase, to obtain a composite intermediate.
(Third step) A step of subj ecting the composite intermediate to a heat treatment, to obtain a sintered body including the ion-conducting phase and the silicon phases dispersed in the ion-conducting phase.
(Fourth step) A step of pulverizing the sintered body, to obtain composite particles each including the ion-conducting phase and the silicon phases dispersed in the ion-conducting phase.

### <First step>

In the first step, a compound for forming an ion-conducting phase is prepared or synthesized. When an amorphous carbon phase is used as the ion-conducting phase, a carbon source is prepared. The carbon source may or may not be amorphous. Through subsequent composite forming (second step) and sintering (third step), the carbon source changes to an amorphous carbon phase.

As the carbon source, for example, water-soluble resins, such as carboxymethyl cellulose (CMC), hydroxyethyl cellulose, polyacrylates, polyacrylamide, polyvinyl alcohol, polyethylene oxide, and polyvinylpyrrolidone, saccharides, such as cellulose and sucrose, petroleum pitch, coal pitch, tar, and the like can be used, but are not limited thereto.

As the carbon source, graphite, graphitizable carbon (soft carbon), and non-graphitizable carbon (hard carbon), carbon black, and the like may also be used. Examples of the carbon black include acetylene black and Ketjen black. Even when graphite is used as the carbon source, most of the crystal structure of the graphite is lost in obtaining a composite material of silicon particles and carbon source using a pulverizer, and an amorphous carbon phase is formed.

When the silicate phase is used as the ion-conducting phase, the first step includes, for example, a step 1a of mixing silicon dioxide and a lithium compound, to obtain a raw material mixture, and a step 1b of firing the raw material mixture, to obtain raw material silicate. The aforementioned element M may be contained in the raw material mixture. The firing in the step 1b is performed, for example, in an oxidizing atmosphere. The firing temperature in the step 1b is preferably 400 °C or higher and 1200 °C or lower, more preferably 800 °C or higher and 1100 °C or lower.

A lithium silicate is produced by melting the raw material mixture, and passing the melt between metal rolls, into flakes. Then, the flakes of the silicate are crystalized by heat treatment in an atmospheric air at a temperature equal to or higher than the glass transition point and equal to or lower than the melting point. The flakes of the silicate may be used without being crystalized. A silicate can also be produced by firing a mixture of predetermined amounts of the raw materials, without being melted, at a temperature equal to or lower than the melting point, to cause a solid-phase reaction.

Examples of the lithium compound include lithium carbonate, lithium oxide, lithium hydroxide, lithium hydride. The lithium compounds may be used singly or in combination of two or more kinds.

Examples of the compound containing an element M include oxides, hydroxides, hydrides, halides, carbonates, oxalates, nitrates, and sulfates of the element M. The compound containing an element M may be used singly or in combination of two or more kinds.

### <Second step>

The second step has, for example, a step of pulverizing a mixture of the compound for forming an ion-conducting phase (e.g., a carbon source or raw material silicate) and raw material silicon while applying a shear force to the mixture, to obtain fine particles of a composite intermediate. Here, for example, the compound for forming an ion-conducting phase and raw material silicon are mixed in a predetermined mass ratio, and the mixture is pulverized into fine particles using a pulverizer like a ball mill. An organic solvent may be added to the mixture, to perform wet-pulverization. At this time, the raw material silicon is finely pulverized, into silicon phases. The silicon phases are dispersed in the matrix of the compound for forming an ion-conducting phase.

The organic solvent that can be used include alcohols, ethers, fatty acids, alkanes, cycloalkanes, silicate esters, metal alkoxides, and the like. A predetermined amount of the organic solvent may be fed into a pulverization vessel all at once in the early stage of the pulverization, or a predetermined amount of the organic solvent may be intermittently fed into a pulverization vessel dividedly in several times during the pulverization. The organic solvent serves to prevent the adhesion of a pulverized object onto the inner wall of the pulverization vessel.

As the raw material silicon, coarse silicon particles with an average particle diameter of about several µm to several tens of µm may be used. It is preferable to control such that the finally obtained silicon phases have a crystallite size of 10 nm or more calculated from the Scherrer's equation using the half-value width of a diffraction peak attributed to the Si (111) plane in an X-ray diffraction pattern.

The second step is not limited to the above. For example, the compound for forming an ion-conducting phase and raw material silicon may be pulverized separately into fine particles, and then mixed together. Alternatively, without using a pulverizer, silicon nanoparticles and nanoparticles of raw material silicate may be synthesized, and mixed together. These nanoparticles can be prepared by any known method, such as a gas phase method (e.g., plasma method) or a liquid phase method (e.g., liquid phase reduction method).

### <Third step>

The third step includes, for example, a step of firing fine particles of the composite intermediate, while applying pressure to the composite intermediate with a hot press or the like, to obtain a sintered body. The firing of the composite intermediate is carried out, for example, in an inert atmosphere (e.g., an atmosphere of argon, nitrogen, etc.).

When an amorphous carbon phase is used as the ion-conducting phase, by heating at 700 °C to 1200 °C in an inert atmosphere, the carbon source is carbonized into amorphous carbon. As a result, composite particles in which silicon phases are dispersed in the amorphous carbon phase, which is the ion-conducting phase, can be obtained.

When a silicate phase is used as the ion-conducting phase, the sintering temperature is preferably 450°C or higher and 1000°C or lower. Within the above temperature range, fine silicon phases can be easily dispersed in the silicate phase having a low crystallinity. The raw material silicate is stable in the above temperature range and hardly reacts with silicon. The firing temperature is preferably 550 °C or higher and 900 °C or lower, more preferably 650 °C or higher and 850 °C or lower. The firing time is, for example, 1 hour or more and 10 hours or less. During sintering, the silicate softens and flows to fill the gaps between the silicon particles. As a result, a dense block-shaped sintered body including a silicate phase, which is the ion-conductive phase, as a sea portion, and silicon phases dispersed like islands in the silicate phase can be obtained.

### <Fourth step>

The fourth step is a step of pulverizing the sintered body to have a desired particle size distribution, to obtain composite particles each including a silicate phase and silicon phases dispersed in the silicate phase. The composite particles are pulverized so as to have an average particle diameter of, for example, 1 to 25 µm.

### <Step of forming S-containing conductive layer>

Next, an example of a step of forming a S-containing conductive layer on the composite particles will be described. As a raw material of the conductive material for forming a conductive layer, for example, coal pitch or coal tar pitch, petroleum pitch, phenolic resin, and the like can be used. A conductive layer covering at least part of the surface of the composite particles is formed by mixing a raw material of the conductive material and the composite particles together, and firing the mixture to carbonize the raw material of the conductive material.

Here, a S-containing conductive layer is formed by mixing a raw material of the conductive material and a raw material of the S component, and firing the mixture. As the raw material of the S component, a sulfuric acid compound or a sulfonic acid compound can be used. The sulfuric acid compound or the sulfonic acid compound may be a salt compound or an ester compound. The cation of the salt compound may be an inorganic cation, such as a metal ion, and may be an organic cation. As the raw material of the S component, for example, CaSO₄ can be preferably used.

A raw material of the conductive material containing a S component may be used. For example, coal tar pitch with a high S content may be used.

The firing of the mixture of the raw material of the conductive material and the composite particles is carried out, for example, in an inert atmosphere (e.g., an atmosphere of argon, nitrogen, etc.). The firing temperature is preferably 450 °C or higher and 1000 °C or lower. Within the above temperature range, a highly conductive S-containing conductive layer can be easily formed on the silicate phase having a low crystallinity. The firing temperature is preferably 550 °C or higher and 900 °C or lower, more preferably 650 °C or higher and 850 °C or lower. The firing time is, for example, 1 hour or more and 10 hours or less.

The S-containing conductive layer may be formed on the composite particles by another method. For example, a gas phase method, such as CVD method, may be used to form a S-containing conductive layer by allowing hydrocarbon gas and a compound containing S to react on the surfaces of the composite particles. The hydrocarbon gas that can be used includes acetylene and methane. The S-containing conductive layer may be formed by mixing carbon black, together with a compound containing S, with the composite particles, and allowing a precursor of the S-containing conductive layer to adhere to surfaces of the composite particles, followed by firing the precursor of the S-containing conductive layer, together with the composite particles.

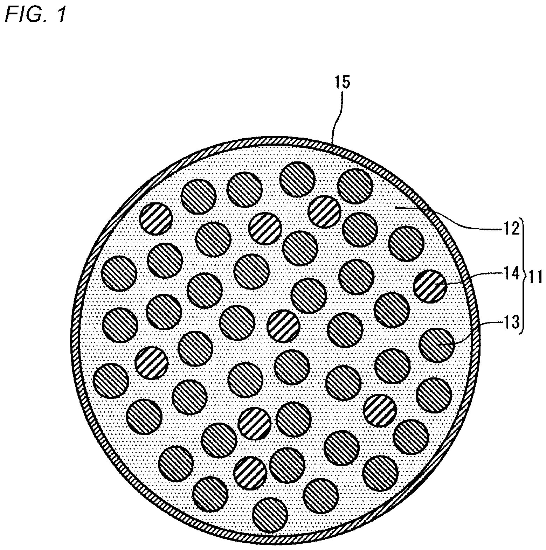

In the following, an example of a negative electrode material for secondary batteries according to one embodiment of the present invention will be described with reference to FIG. 1. FIG. 1 is a schematic sectional view of a composite particle 11. The composite particle 11 includes a silicate phase 12, silicon (elementary Si) phases 13 dispersed in the silicate phase 12, and a compound 14 of an element M which is an optional component. The surface of the composite particle 11 is at least partially covered with a S-containing conductive layer 15.

The composite particle 11 has, for example, a sea-island structure, and in a cross section thereof, fine silicon phases 13 are scattered approximately uniformly throughout the matrix of the silicate phase 12 without being unevenly distributed in some areas. The silicate phase 12 may slightly contain SiO₂ like a natural oxide film formed on surfaces of the silicon phases.

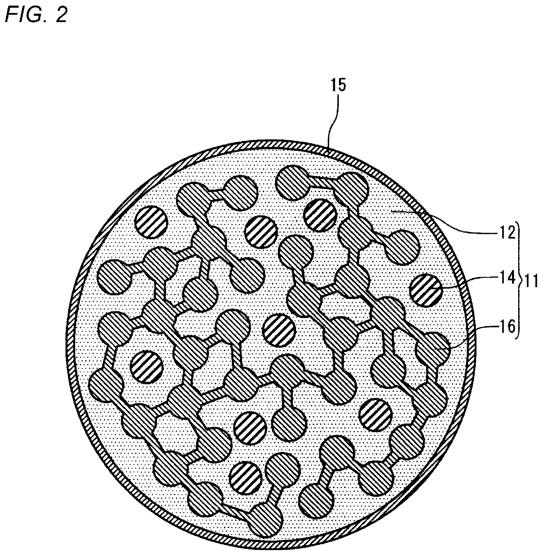

FIG. 2 is a schematic sectional view of the composite particle 11, in a battery assembled using the composite particles 11 covered with a S-containing conductive layer, as a negative electrode active material, after subjected to charging and discharging several times. Through charging and discharging, the adjacent silicon phases 13 in FIG. 1 can be joined to each other, forming a network-like silicon phase 16.

### (Secondary battery)

A secondary battery according to an embodiment of the present disclosure includes a positive electrode, a negative electrode, and an electrolyte. The negative electrode includes a carbon material and the above-described negative electrode material for secondary batteries. Usually, a separator is interposed between the positive electrode and the negative electrode. The carbon material and the negative electrode material for secondary batteries are both used as a negative electrode active material, and contribute to the absorption and release of cations (e.g., lithium ions) during charging and discharging. The secondary battery may be a nonaqueous electrolyte secondary battery.

The secondary battery will be described in detail below.

### [Negative electrode]

The negative electrode may include a negative electrode current collector, and a negative electrode mixture layer supported on a surface of the negative electrode current collector. The negative electrode mixture layer can be formed by applying a negative electrode slurry of a negative electrode mixture dispersed in a dispersion medium, onto a surface of the negative electrode current collector, followed by drying. The applied film after drying may be rolled as necessary. The negative electrode mixture layer may be formed on one surface or both surfaces of the negative electrode current collector.

The negative electrode mixture contains a negative electrode active material as an essential component, and can contain a binder, a conductive agent, a thickener, and the like, as optional components. The negative electrode active material includes the above-described negative electrode material (composite particles having a conductive layer). The composite particles can absorb many lithium ions into the silicon phases, and contributes to increasing the capacity of the negative electrode.

The negative electrode active material preferably further includes a carbon material that electrochemically absorbs and releases lithium ions. The composite particles having a conductive layer expand and contract in volume during charging and discharging. Therefore, when the proportion thereof in the negative electrode active material is increased, a contact failure tends to occur during charging and discharging, between the negative electrode active material and the negative electrode current collector. However, using the composite particles having a conductive layer and a carbon material in combination makes it possible to achieve excellent cycle characteristics, while imparting high capacity of the silicon phases to the negative electrode. In view of achieving high capacity and improved cycle characteristics, a ratio B/A of a mass B of the composite particles having a conductive layer (the silicon-containing material) to a mass A of the carbon material preferably satisfies 0.05 ≤ B/A ≤ 0.3.

Examples of the carbon material include graphite, graphitizable carbon (soft carbon), and non-graphitizable carbon (hard carbon). In particular, graphite is preferred in terms of its excellent stability during charging and discharging and small irreversible capacity. Graphite means a material having a graphite-like crystal structure, examples of which include natural graphite, artificial graphite, and graphitized mesophase carbon particles. The carbon material may be used singly or in combination of two or more kinds.

As the negative electrode current collector, a non-porous conductive substrate (metal foil, etc.) or a porous conductive substrate (mesh, net, punched sheet, etc.) is used. Examples of the material of the negative electrode current collector include stainless steel, nickel, nickel alloy, copper, and copper alloy. The thickness of the negative electrode current collector is not particularly limited, but is preferably 1 to 50 µm, more preferably 5 to 20 µm, in view of the balance between high strength and lightweight of the negative electrode.

The binder may be a resin material, examples of which include: fluorocarbon resins, such as polytetrafluoroethylene and polyvinylidene fluoride (PVDF); polyolefin resins, such as polyethylene and polypropylene; polyamide resins, such as aramid resin; polyimide resins, such as polyimide and polyamide imide; acrylic resins, such as polyacrylic acid, polymethyl acrylate, and ethylene-acrylic acid copolymer; vinyl resins, such as polyacrylonitrile and polyvinyl acetate; polyvinylpyrrolidone; polyethersulfone; and rubbery materials, such as styrene-butadiene copolymer rubber (SBR). The binder may be used singly or in combination of two or more kinds.

Examples of the conductive agent include: carbons, such as acetylene black; conductive fibers, such as carbon fibers and metal fibers; fluorinated carbon; metal powders such as aluminum; conductive whiskers, such as zinc oxide and potassium titanate; conductive metal oxides, such as titanium oxide; and organic conductive materials, such as phenylene derivatives. The conductive agent may be used singly or in combination of two or more kinds.

Examples of the thickener include: cellulose derivatives, such as carboxymethyl cellulose (CMC), modified products thereof (including salts such as Na salts), and methylcellulose (cellulose ethers, etc.); saponified products of a polymer having a vinyl acetate unit, such as polyvinyl alcohol; and polyethers (e.g., polyalkylene oxide, such as polyethylene oxide). The thickener may be used singly or in combination of two or more kinds.

The dispersion medium may be, although not particularly limited, for example, water, an alcohol such as ethanol, an ether such as tetrahydrofuran, an amide such as dimethylformamide, N-methyl-2-pyrrolidone (NMP), and a mixed solvent thereof.

### [Positive electrode]

The positive electrode may include a positive electrode current collector, and a positive electrode mixture layer supported on a surface of the positive electrode current collector. The positive electrode mixture layer can be formed by applying a positive electrode slurry of a positive electrode mixture dispersed in a dispersion medium, onto a surface of the positive electrode current collector, followed by drying. The applied film after drying may be rolled as necessary. The positive electrode mixture layer may be formed on one surface or both surfaces of the positive electrode current collector. The positive electrode mixture contains a positive electrode active material as an essential component, and can contain a binder, a conductive agent, and the like, as optional components. As the dispersion medium for the positive electrode slurry, NMP or the like is used.

As the positive electrode active material, for example, a lithium-containing composite oxide can be used. Examples thereof include LiₐCoO₂, LiₐNiO₂, LiₐMnO₂, LiₐCo_{b}Ni_{1-b}O₂, LiₐCo_{b}Me_{1-b}O_{c}, LiₐNi_{1-b}Me_{b}O_{c}, LiₐMn₂O₄, LiₐMn_{2-b}Me_{b}O₄, LiMePO₄, and Li₂MePO₄F, where Me is at least one selected from the group consisting of Na, Mg, Sc, Y, Mn, Fe, Co, Ni, Cu, Zn, Al, Cr, Pb, Sb, and B. Here, a = 0 to 1.2, b = 0 to 0.9, and c = 2.0 to 2.3. The value "a" representing the molar ratio of lithium increases and decreases during charging and discharging.

As the binder and the conductive agent, those as exemplified for the negative electrode can be used. As the conductive agent, graphite, such as natural graphite and artificial graphite, may also be used.

The shape and the thickness of the positive electrode current collector can be respectively selected from the shapes and the ranges corresponding to those of the negative electrode current collector. Examples of the material of the positive electrode current collector include stainless steel, aluminum, aluminum alloy, and titanium.

### [Electrolyte]

The electrolyte contains a solvent, and a lithium salt dissolved in the solvent. The concentration of the lithium salt in the electrolyte is, for example, 0.5 to 2 mol/L. The electrolyte may contain a known additive. By setting the lithium salt concentration within the above range, it is possible to obtain a nonaqueous electrolyte having excellent ion conductivity and moderate viscosity. The lithium salt concentration, however, is not limited to the above.

The solvent may be an aqueous solvent or a nonaqueous solvent. As the nonaqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC), and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). Examples of the chain carboxylic acid ester include methyl formate, ethyl formate, propyl formate, methyl acetate, ethyl acetate, propyl acetate, methyl propionate, ethyl propionate, and propyl propionate. The nonaqueous solvent may be used singly or in combination of two or more kinds.

Examples of the lithium salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, LiI, borates, and imide salts. Examples of the borates include lithium bis(1,2-benzenedioleate(2-)-O,O')borate, lithium bis(2,3-naphthalenediolate(2-)-O,O')borate, lithium bis(2,2'-biphenyldiolate(2-)-O,O')borate, and lithium bis(5-fluoro-2-olate-1-benzenesulfonic acid-O,O')borate. Examples of the imide salts include lithium bisfluorosulfonyl imide (LiN(FSO₂)₂), lithium bistrifluoromethanesulfonyl imide (LiN(CF₃SO₂)₂), lithium trifluoromethanesulfonyl nonafluorobutanesulfonyl imide (LiN(CF₃SO₂)(C₄F₉SO₂)), and lithium bispentafluoroethanesulfonyl imide (LiN(C₂F₅SO₂)₂). In particular, LiPF₆ is preferred. The lithium salt may be used singly, or in combination of two or more kinds.

A compound containing a S component (sulfur compound) may be added to the electrolyte. The sulfur compound can be decomposed on the surface of the silicon-containing material, to form a surface film containing S on the surface of the silicon-containing material. The surface film containing S is robust and stable, and has a function of suppressing the dissolution of the ion-conducting phase and suppressing the deterioration in charge-discharge cycle characteristics due to the progress of the side reaction. However, when the sulfur compound is contained at a high concentration in the electrolyte, the battery case tends to be corroded. Moreover, the surface film containing S can also be formed on the surface of the carbon material. This may increase the resistance to lithium-ion migration on the surface of the carbon material, which may conversely result in the deterioration in charge-discharge cycle characteristics.

In this regard, by using a silicon-containing material covered with a S-containing conductive layer, the surface film containing S is selectively formed on the surface of the silicon-containing material, and the formation of a surface film containing S on the carbon material is suppressed. It is not necessary, therefore, to add a compound containing a S component (sulfur compound) to the electrolyte. This enhances the effect of suppressing the deterioration in charge-discharge cycle characteristics, and also suppresses the corrosion of the battery case. A silicon-containing material covered with a S-containing conductive layer may be used, and a sulfur compound may be added to the electrolyte. In this case, however, in order to suppress the corrosion of the battery case, it is preferable to set the concentration of the sulfur compound in the electrolyte to 5 mass% or less.

The sulfur compound added to the electrolyte include, for example, sulfates and sulfate esters, salts and esters of sulfonic acid, and sulfur-containing imides and salts thereof. Examples of the sulfate esters include cyclic sulfate esters, such as 1-propene-1,3-sultone (PRES). Examples of the sulfonate esters include cyclic sulfonate esters, such as ethylene sulfite (ES). Examples of the sulfur-containing imide salts include lithium bis(fluorosulfonyl)imide, and lithium bis(trifluoromethanesulfonyl)imide. Sulfuric acid and sulfonic acid may be, for example, like lithium fluorosulfonate, those in which part of the oxygen bonded to the sulfur atom is replaced with fluorine.

### [Separator]

Usually, it is desirable to interpose a separator between the positive electrode and the negative electrode. The separator is excellent in ion permeability and has moderate mechanical strength and electrically insulating properties. As the separator, for example, a microporous thin film, a woven fabric, a nonwoven fabric, and the like can be used. As the material of the separator, for example, a polyolefin, such as polypropylene and polyethylene, can be used.

One example of the structure of the secondary battery is a structure in which an electrode group formed by winding the positive electrode and the negative electrode with the separator interposed therebetween is housed in an outer body, together with the electrolyte. However, this is not a limitation, and another form of electrode group may be applied. For example, a stacked electrode group in which the positive electrode and the negative electrode stacked together, with a separator interposed therebetween may be used. The secondary battery may be in any form, such as cylindrical type, prismatic type, coin type, button type, and laminate type.

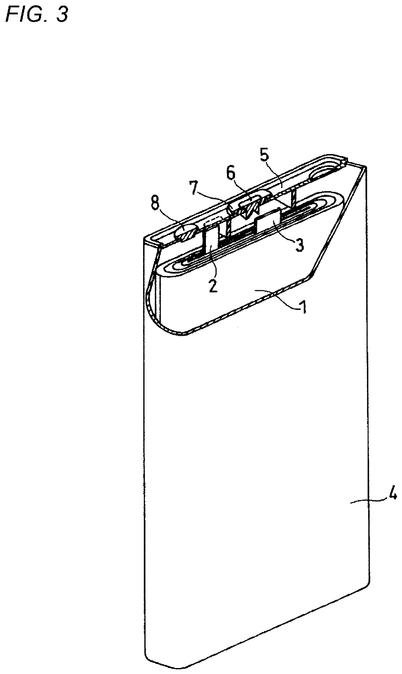

FIG. 3 is a partially cut-away schematic oblique view of a prismatic secondary battery according to one embodiment of the present disclosure.

The battery includes a bottomed prismatic battery case 4, an electrode group 1 and an electrolyte (not shown) housed in the battery case 4, and a sealing plate 5 sealing the opening of the battery case 4. The electrode group 1 includes a long negative electrode, a long positive electrode, and a separator interposed therebetween. The negative electrode, the positive electrode, and the separator are wound around a flat plate-like winding core, and thereafter, the winding core is removed, so that the electrode group 1 is formed. The sealing plate 5 has a liquid injection port closed by a sealing plug 8, and a negative electrode terminal 6 insulated from the sealing plate 5 by a gasket 7.

To the negative electrode current collector of the negative electrode, a negative electrode lead 3 is attached at its one end by welding or the like. To the positive electrode current collector of the positive electrode, a positive electrode lead 2 is attached at its one end by welding or the like. The other end of the negative electrode lead 3 is electrically connected to the negative electrode terminal 6. The other end of the positive electrode lead 2 is electrically connected to the sealing plate 5. On top of the electrode group 1, a resin frame body providing separation between the electrode group 1 and the sealing plate 5 and providing separation between the negative electrode lead 3 and the battery case 4 is disposed.

### <<Supplementary notes>>

The above description of embodiments discloses the following techniques.

### (Technique 1)

A negative electrode material for secondary batteries, comprising
a silicon-containing material including composite particles containing silicon, and a conductive layer disposed on surfaces of the composite particles,
the composite particles each including an ion-conducting phase, and silicon phases dispersed in the ion-conducting phase,
the conductive layer containing a sulfur component, and having a content N₁ of sulfur element in the conductive layer of 50 mass% or less.

### (Technique 2)

The negative electrode material for secondary batteries according to technique 1, wherein a ratio N₂ of a mass of the sulfur element contained in the conductive layer to a mass of the silicon-containing material is 0.02% or more.

### (Technique 3)

The negative electrode material for secondary batteries according to technique 2, wherein the ratio N₂ is 0.02% or more and 1% or less.

### (Technique 4)

The negative electrode material for secondary batteries according to any one of techniques 1 to 3, wherein the ion-conducting phase is a silicate phase.

### (Technique 5)

The negative electrode material for secondary batteries according to technique 4, wherein the silicate phase contains at least one element selected from the group consisting of alkali metal elements and Group II elements.

### (Technique 6)

The negative electrode material for secondary batteries according to technique 4 or 5, wherein
the silicate phase further contains an element M, and
the element M includes at least one element selected from the group consisting of boron (B), aluminum (Al), zirconium (Zr), niobium (Nb), tantalum (Ta), vanadium (V), lanthanum (La), yttrium (Y), titanium (Ti), phosphorus (P), bismuth (Bi), zinc (Zn), tin (Sn), lead (Pb), antimony (Sb), cobalt (Co), erbium (Er), fluorine (F), and tungsten (W).

### (Technique 7)

The negative electrode material for secondary batteries according any one of techniques 1 to 6, wherein the ion-conducting phase is an amorphous carbon phase.

### (Technique 8)

A secondary battery, comprising
a positive electrode, a negative electrode, and an electrolyte, wherein
the negative electrode includes a carbon material, and the negative electrode material for secondary batteries according to any one of technique 1 to 7.

### (Technique 9)

The secondary battery according to technique 8, wherein a ratio B/A of a mass B of the silicon-containing material to a mass A of the carbon material satisfies 0.05 ≤ B/A ≤ 0.3.

### (Technique 10)

The secondary battery according to technique 8 or 9, wherein the electrolyte contains no sulfur compound, or the electrolyte contains a sulfur compound at a concentration of 5 mass% or less.

The present invention will be specifically described below by way of Examples and Comparative Examples. The present invention, however, is not limited to the following Examples.

### (Example 1)

### [Preparation of composite particles]

### <First step>

Silicon dioxide and Li₂CO₃ were mixed, and in air, the mixture was fired at 950 °C for 10 hours, to obtain a silicate. The obtained silicate was pulverized to have an average particle diameter of 10 µm.

### <Second step>

The silicate and raw material silicon (3N, average particle diameter 10 µm) were mixed. In the mixture, the mass ratio of the silicate and the raw material silicon was set to 40:60.

The mixture was placed in a pot (made of SUS, volume: 500 mL) of a planetary ball mill (P-5, available from Fritsch Co., Ltd.), together with 24 SUS balls (diameter 20 mm), and with the lid closed, the mixture was pulverized at 200 rpm for 50 hours in an inert atmosphere.

### <Third step>

Next, the powdered mixture was taken out in an inert atmosphere, which was then fired at 600 °C for 4 hours, in an inert atmosphere, with a pressure applied by a hot press, to obtain a sintered body of the mixture.

### <Fourth step>

Next, the obtained sintered body was pulverized, and passed through a 40-µm mesh, to obtain composite particles. The composition of the major component of the silicate phase in the composite particles determined by the already-described method was Li₂Si₂O₅.

### <Step of forming S-containing conductive layer>

Next, the composite particles, coal tar pitch, and calcium sulfate were mixed in a mass ratio of 94.85:5:0.15, and then, fired at 800 °C in an argon atmosphere, to form a S-containing conductive layer covering at least part of the surface of the composite particles. A silicon-containing material was thus obtained. The coal tar pitch was converted into amorphous carbon by firing.

The thickness of the S-containing conductive layer determined by the already-described method was 10 nm.

The ratio by mass of the S-containing conductive layer to the total of the composite particles and the S-containing conductive layer was determined from the difference between the masses of the composite particles before and after forming the S-containing conductive layer thereon, which was 2.9 mass%. In addition, the S content N₁ in the S-containing conductive layer, and the mass ratio N₂ of the S contained in the S-containing conductive layer to the silicon-containing material (the total of the composite particles and the S-containing conductive layer) were determined by the already-described method, which were 1.0 mass% and 0.03 mass%, respectively.

### [Production of negative electrode]

The composite particles having a S-containing conductive layer was mixed with graphite in a mass ratio of 5:95, and used as a negative electrode active material. The negative electrode active material, a Na salt of CMC, and SBR were mixed together in a mass ratio of 97.5:1:1.5, to form a negative electrode mixture, to which water was added and stirred, to prepare a negative electrode slurry. Next, the negative electrode slurry was applied onto a surface of a copper foil so that the mass of the negative electrode mixture per 1 m² was 190 g, and the applied film was dried, and then rolled, to produce a negative electrode with a negative electrode mixture layer having a density of 1.5 g/cm³ formed on both sides of the copper foil.

### [Production of positive electrode]

Lithium cobalt oxide, acetylene black, and PVDF were mixed together in a mass ratio of 95:2.5:2.5, to form a positive electrode mixture, to which NMP was added and stirred, to prepare a positive electrode slurry. Next, the positive electrode slurry was applied onto a surface of an aluminum foil, and the applied film was dried, and then rolled, to produce a positive electrode with a positive electrode mixture layer having a density of 3.6 g/cm³ formed on both sides of the aluminum foil.

### [Preparation of nonaqueous electrolyte]

LiPF₆ was dissolved at a concentration of 1.0 mol/L in a mixed solvent containing EC and DEC in a volume ratio of 3:7, to prepare a nonaqueous electrolyte (electrolyte solution).

### [Fabrication of nonaqueous electrolyte secondary battery]

The positive electrode and the negative electrode, with a tab attached to each electrode, were wound spirally with a separator interposed therebetween such that the tab was positioned at the outermost layer, to form an electrode group. The electrode group was inserted into an outer body made of aluminum laminated film and dried under vacuum at 105 °C for 2 hours. Thereafter, the nonaqueous electrolyte was injected, and the opening of the outer body was sealed. A battery A1 of Example 1 was thus obtained.

### (Examples 2 and 3, Comparative Examples 1 and 2)

In the step of forming a S-containing conductive layer, the mixing ratio of the composite particles, coal tar pitch, and calcium sulfate was changed. With the proportion of coal tar pitch in the whole of the mixture kept constant, the mixing ratio of the composite particles and calcium sulfate was changed.

In Example 2, the composite particles, coal tar pitch, and calcium sulfate were mixed in a mass ratio of 93:5:2, and except for this, in the same manner as in Example 1, a battery A2 was obtained. The S content N₁ in the S-containing conductive layer was 14.7 mass%, and the mass ratio N₂ of the S contained in the S-containing conductive layer to the silicon-containing material (the total of the composite particles and the S-containing conductive layer) was 0.47%.

In Example 3, the composite particles, coal tar pitch, and calcium sulfate were mixed in a mass ratio of 92:5:3, and except for this, in the same manner as in Example 1, a battery A2 was obtained. The S content N₁ in the S-containing conductive layer was 20.9 mass%, and the mass ratio N₂ of the S contained in the S-containing conductive layer to the silicon-containing material (the total of the composite particles and the S-containing conductive layer) was 0.71%.

In Comparative Example 1, without adding calcium sulfate, the composite particles and coal tar pitch were mixed in a mass ratio of 97:3, and except for this, in the same manner as in Example 1, a battery B1 was obtained.

In Comparative Example 2, the composite particles, coal tar pitch, and calcium sulfate were mixed in a mass ratio of 85:5:10, and except for this, in the same manner as in Example 1, a battery B2 was obtained. The S content N₁ in the S-containing conductive layer was 51.2 mass%, and the mass ratio N₂ of the S contained in the S-containing conductive layer to the silicon-containing material (the total of the composite particles and the S-containing conductive layer) was 2.66%.

### (Example 4)

In preparing a nonaqueous electrolyte, lithium fluorosulfonate (FSL) was added at a concentration of 5 mass% to a mixed solvent containing EC and DEC in a volume ratio of 3:7, and lithium hexafluorophosphate (LiPF₆) was further dissolved therein at a concentration of 1.0 mol/L, to prepare a nonaqueous electrolyte (electrolyte solution). Except for this, in the same manner as in Example 1, a battery A4 was obtained. The S content N₁ in the S-containing conductive layer was 1.1 mass%, and the mass ratio N₂ of the S contained in the S-containing conductive layer to the silicon-containing material (the total of the S-containing composite particles and the conductive layer) was 0.03%.

### (Example 5)

### [Preparation of composite particles]

### <First step>

Graphitizable carbon (soft carbon) was used as a carbon source.

### <Second step>

The carbon source and raw material silicon (3N, average particle diameter 10 µm) were mixed. The mass ratio of the carbon source to the raw material silicon in the mixture was set to 40:60.

The mixture was placed in a pot (made of SUS, volume: 500 mL) of a planetary ball mill (P-5, available from Fritsch Co., Ltd.), together with 24 SUS balls (diameter 20 mm), and with the lid closed, the mixture was pulverized at and the pot was closed with a lid containing 24 SUS balls (diameter 20 mm), and with the lid closed, the mixture was pulverized at 200 rpm for 50 hours in an inert atmosphere.

### <Third step>

Next, the powdered mixture was taken out from the inert atmosphere, which was then fired at 800 °C for 4 hours, in an inert atmosphere, with a pressure applied by a hot press, to obtain a sintered body of the mixture.

### <Fourth step>

Next, the obtained sintered body was pulverized, and passed through a 40-µm mesh, to obtain composite particles having an amorphous carbon phase.

### <Step of forming S-containing conductive layer>

Next, the composite particles, coal tar pitch, and calcium sulfate were mixed in a mass ratio of 94.5:5:0.5, and then, fired at 800 °C in an argon atmosphere, to form a S-containing conductive layer covering at least part of the surface of the composite particles. A silicon-containing material was thus obtained. The coal tar pitch was converted into amorphous carbon by firing.

The ratio by mass of the S-containing conductive layer to the total of the composite particles and the S-containing conductive layer was determined from the difference between the masses of the composite particles before and after forming the S-containing conductive layer thereon, which was 2.8 mass%. In addition, the S content N₁ in the S-containing conductive layer, and the mass ratio N₂ of the S contained in the S-containing conductive layer to the silicon-containing material (the total of the composite particles and the S-containing conductive layer) were determined by the already-described method, which were 3.9 mass% and 0.11%, respectively.

Using the silicon-containing material obtained in this way, and for the subsequent steps, in the same manner as in Example 1, a negative electrode was prepared, and a battery A5 of Example 5 was obtained.

### (Example 6, Comparative Example 3)

In the step of forming a S-containing conductive layer, the mixing ratio of the composite particles, coal tar pitch, and calcium sulfate was changed. In Example 6, the composite particles, coal tar pitch, and calcium sulfate were mixed in a mass ratio of 93.5:5:1.5, and except for this, in the same manner as in Example 5, a battery A6 was obtained. The S content N₁ in the S-containing conductive layer was 9.4 mass%, and the mass ratio N₂ of the S contained in the S-containing conductive layer to the silicon-containing material (the total of the composite particles and the S-containing conductive layer) was 0.30 mass%.

In Comparative Example 3, without adding calcium sulfate, the composite particles and coal tar pitch were mixed in a mass ratio of 95:5, and except for this, in the same manner as in Example 5, a battery B3 was obtained.

### (Example 7)

In preparing a nonaqueous electrolyte, 1-propene 1,3-sultone (PRES) was added at a concentration of 1 mass% to a mixed solvent containing EC and DEC in a volume ratio of 3:7, and LiPF₆ was further dissolved at a concentration of 1.0 mol/L, to prepare a nonaqueous electrolyte (electrolyte solution). Except for this, in the same manner as in Example 5, a battery A7 was obtained. The S content N₁ in the S-containing conductive layer was 3.9 mass%, and the mass ratio N₂ of the S contained in the S-containing conductive layer to the silicon-containing material (the total of the composite particles and the S-containing conductive layer) was 0.11%.

### (Example 8)

In preparing a nonaqueous electrolyte, ethylene sulfite (ES) was added at a concentration of 1 mass% to a mixed solvent containing EC and DEC in a volume ratio of 3:7, and LiPF₆ was further dissolved at a concentration of 1.0 mol/L, to prepare a nonaqueous electrolyte (electrolyte solution). Except for this, in the same manner as in Example 5, a battery A8 was obtained. The S content N₁ in the S-containing conductive layer was 3.9 mass%, and the mass ratio N₂ of the S contained in the S-containing conductive layer to the silicon-containing material (the total of the composite particles and the S-containing conductive layer) was 0.11%.

### [Cycle test]

### <Charging>

A constant-current charging was performed at a current of 1 It (800 mA) until the voltage reached 4.2 V, and then, a constant-voltage charging was performed at a constant voltage of 4.2 V until the current reached 1/20 It (40 mA).

### <Discharging>

A constant-current discharging was performed at a current of 1 It (800 mA) until the voltage reached 2.75 V.

The rest time between charging and discharging was set to 10 minutes.

The charging and the discharging were performed in a 25 °C environment.

For each battery, a discharge capacity C1 at the first cycle and a discharge capacity C100 at the 100th cycle were obtained. The ratio expressed by (C1-C100)/C1 was evaluated as a capacity deterioration rate R. The evaluation results for the capacity deterioration rate R of the batteries A1 to A4, B1 and B2 are shown in Table 1. The evaluation results for the capacity deterioration rate R of the batteries A5 to A8 and B3 are shown in Table 2. In Table 1, the R value for each battery is shown as a relative value, with the value of the capacity deterioration rate R obtained for the battery B1 of Comparative Example 1 taken as 100. In Table 2, the R value for each battery is shown as a relative value, with the value of the capacity deterioration rate R obtained for the battery B3 of Comparative Example 3 taken as 100. The smaller the R value is, the less the deterioration in charge-discharge cycle characteristics is, showing the superiority.

**[Table 1]**

| battery | ion-conducting phase | S content in conductive layer (mass%) | S amount occupying silicon-containing material (mass%) | sulfur compound in electrolyte solution | | capacity deterioration rate R |
|---|---|---|---|---|---|---|
| | | | | kind | concentration (mass%) | |
| A1 | Li₂Si₂O₅ | 1.0 | 0.03 | - | - | 90 |
| A2 | Li₂Si₂O₅ | 14.7 | 0.47 | - | - | 77 |
| A3 | Li₂Si₂O₅ | 20.9 | 0.71 | - | - | 89 |
| A4 | Li₂Si₂O₅ | 1.1 | 0.03 | FSL | 0.5 | 87 |
| B1 | Li₂Si₂O₅ | - | - | - | - | 100 |
| B2 | Li₂Si₂O₅ | 51.2 | 2.66 | - | - | 105 |

**[Table 2]**

| battery | ion-conducting phase | S content in conductive layer (mass%) | S amount occupying silicon-containing material (mass%) | sulfur compound in electrolyte solution | | capacity deterioration rate R |
|---|---|---|---|---|---|---|
| | | | | kind | concentration (mass%) | |
| A5 | amorphous carbon | 3.9 | 0.11 | - | - | 91 |
| A6 | amorphous carbon | 9.4 | 0.30 | - | - | 88 |
| A7 | amorphous carbon | 3.9 | 0.11 | PRES | 1 | 82 |
| A8 | amorphous carbon | 3.9 | 0.11 | ES | 2 | 74 |
| B2 | amorphous carbon | - | - | - | - | 100 |

In the batteries A1 to A4, B1 and B2, the composite particles including a silicate phase as the ion-conducting phase were used as the negative electrode active material. The batteries A1 to A4, in which surfaces of the composite particles were covered with a S-containing conductive layer and the S content in the S-containing conductive layer was set to 50 mass% or less relative to the whole conductive layer, exhibited a low capacity deterioration rate, as compared to the batteries B1 and B2. This is presumably because, by including S in the S-containing conducive layer, a surface film containing S (solid electrolyte film) was formed so as to cover the surface of the silicon-containing material, which acted as a barrier layer for suppressing the side reaction, and suppressed the degradation of the silicate phase.

On the other hand, in the battery B2, although surfaces of the composite particles were covered with a S-containing conductive layer, the S content in the S-containing conductive layer exceeded 50 mass% relative to the whole conductive layer, which presumably resulted in a higher capacity deterioration rate than in the battery B1.

In the batteries A5 to A8 and B3, the composite particles including an amorphous carbon phase as the ion-conducting phase were used as the negative electrode active material. In this case, too, as in the case where a silicate phase was used as the ion-conducting phase, the batteries A5 to A8, in which surfaces of the composite particles was covered with a S-containing conductive layer and the S content in the S-containing conductive layer was set to 50 mass% or less relative to the whole conductive layer, exhibited a low capacity deterioration rate, as compared to the battery B3.

### [Industrial Applicability]

The secondary battery according to the present disclosure is useful as a main power source for mobile communication devices, portable electronic devices, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug, 11: composite particle, 12: silicate phase, 13 (16): silicon phase, 14: compound of element M, 15: S-containing conductive layer

## Claims

1. A negative electrode material for secondary batteries, comprising
a silicon-containing material including composite particles containing silicon, and a conductive layer disposed on surfaces of the composite particles,
the composite particles each including an ion-conducting phase, and silicon phases dispersed in the ion-conducting phase,
the conductive layer containing a sulfur component, and having a content N₁ of sulfur element in the conductive layer of 50 mass% or less.

2. The negative electrode material for secondary batteries according to claim 1, wherein a ratio N₂ of a mass of the sulfur element contained in the conductive layer to a mass of the silicon-containing material is 0.02% or more.

3. The negative electrode material for secondary batteries according to claim 2, wherein the ratio N₂ is 0.02% or more and 1% or less.

4. The negative electrode material for secondary batteries according to any one of claims 1 to 3, wherein the ion-conducting phase is a silicate phase.

5. The negative electrode material for secondary batteries according to claim 4, wherein the silicate phase contains at least one element selected from the group consisting of alkali metal elements and Group II elements.

6. The negative electrode material for secondary batteries according to claim 4, wherein
the silicate phase further contains an element M, and
the element M includes at least one element selected from the group consisting of boron (B), aluminum (Al), zirconium (Zr), niobium (Nb), tantalum (Ta), vanadium (V), lanthanum (La), yttrium (Y), titanium (Ti), phosphorus (P), bismuth (Bi), zinc (Zn), tin (Sn), lead (Pb), antimony (Sb), cobalt (Co), erbium (Er), fluorine (F), and tungsten (W).

7. The negative electrode material for secondary batteries according any one of claims 1 to 3, wherein the ion-conducting phase is an amorphous carbon phase.

8. A secondary battery, comprising
a positive electrode, a negative electrode, and an electrolyte, wherein
the negative electrode includes a carbon material, and the negative electrode material for secondary batteries according to any one of claims 1 to 3.

9. The secondary battery according to claim 8, wherein a ratio B/A of a mass B of the silicon-containing material to a mass A of the carbon material satisfies 0.05 ≤ B/A ≤ 0.3.

10. The secondary battery according to claim 8, wherein the electrolyte contains no sulfur compound, or the electrolyte contains a sulfur compound at a concentration of 5 mass% or less.
